# EUROPÄISCHE PATENTSCHRIFT

(11) **EP 0 629 718 B1**
(45) Veröffentlichungstag und Bekanntmachung des Hinweises auf die Patenterteilung: **14.05.1997**
(21) Anmeldenummer: 94109274.4
(22) Anmeldetag: 16.06.1994
(51) Int. Cl.: C25B 3/10, C25B 11/08, C07F 7/08

(54) **Verfahren zur elektrochemischen Synthese von Organosiliciumverbindungen sowie eine Vorrichtung zur Durchführung des Verfahrens und ihre Verwendung zur Herstellung von Organosiliciumverbindungen**
Process for electrochemical synthesis of organic silicon compounds as well as an apparatus for carrying outsaid process and the use of said apparatus for preparing said organic silicon compounds
Procédé de synthèse électrochimique composés organiques du silicium ainsi qu un appareillage pour le effectuer procédé et usage de cet appareillage pour la préparation desdits composés organiques du silicium

(30) Priorität: 17.06.1993 DE 4320042
(43) Veröffentlichungstag der Anmeldung: 21.12.1994
(73) Patentinhaber: Wacker-Chemie GmbH, 81737 München (DE)
(72) Erfinder: Hengge, Edwin, Prof. Dr., A-8045 Graz-Andritz (AT); Jammegg, Christa, A-8045 Graz (AT); Kalchauer, Wilfried, Dr., D-84489 Burghausen (DE)

(56) Entgegenhaltungen:
- EP-A- 0 032 377
- GB-A- 2 234 511
- US-A- 4 695 441
- ELECTROCHIMICA ACTA, Bd.35, Nr.11, 1990, OXFORD, GB Seiten 1867 - 1872 MASANOBU UMEZAWA ET AL. 'ELECTROREDUCTIVE POLYMERISATION OF ORGANODICHLOROMONOSILANES'

## Beschreibung

Die Erfindung betrifft ein Verfahren zur elektrochemischen Herstellung von Organosiliciumverbindungen sowie eine Vorrichtung zur Durchführung des Verfahrens und die Verwendung dieser Vorrichtung zur Herstellung von Organosiliciumverbindungen.
Verfahren zur elektrochemischen Synthese von Organosiliciumverbindungen sind bereits bekannt. Beispielsweise wird in der EP-A2 446 578 ein Verfahren zur elektrochemischen Herstellung von Polysilanen aus Halogenmonosilanen beschrieben. Aus der DE-A1 40 24 600 ist ein elektrochemisches Verfahren zur Herstellung von Carbosilanen und Polycarbosilanen aus (Halogenalkyl)-halogensilanen bekannt. P. Pons et al. beschreiben in J. Organomet. Chem. 358 (1988), 31, und in J. Organomet. Chem 321 (1987), C27, ein elektrochemisches Verfahren zur Ausbildung von Si-C-Bindungen durch Umsetzung von Chlorsilanen mit halogenorganischen Verbindungen.

Allen diesen elektrochemischen Verfahren ist gemeinsam, daß sich während des elektrochemischen Verfahrens unerwünschte Nebenprodukte bilden, die entweder den Reaktionsverlauf negativ beeinflußen oder schwer zu entsorgen sind. Falls, wie in der DE-A1 4024600 beschrieben, bei dem elektrochemischen Verfahren eine inerte Anode verwendet wird, bildet sich beim Einsatz einer derartigen Elektrode anodenseitig das elementare Halogen. In dem dort beschriebenen Fall bildet sich elementares Chlor. Dieses kann mit dem Leitsalz, dem Lösungsmittel und/oder dem eingesetzten Silan reagieren. Diese Reaktion wirkt sich so aus, daß das Lösungsmittel chloriert (halogeniert) wird und mit dem Silan reagiert oder sich an der Kathode ein Carbanion/Radikal bildet und dieses mit dem Silan reagiert. Eine andere Möglichkeit ist, daß das Leitsalz im chlorierten (halogenierten) Lösungsmittel eine geringere Löslichkeit besitzt und teilweise ausfällt und als Folge davon der Stromfluß in der Elektrolysezelle verringert wird. Eine weitere Möglichkeit ist, daß die Anode durch das Halogen passiviert wird und dadurch der Stromfluß in der Elektrolysezelle verringert wird.

Handelt es sich bei der Anode um eine nicht inerte Anode (Opferanode) wird zwar die Bildung von elementarem Halogen verhindert. Jedoch bilden sich dabei Metallhalogenide, die entsprechend aufgearbeitet und entsorgt werden müssen. Falls die Metallhalogenide im System löslich sind und nicht entsprechend komplexiert werden, können diese zur Kathode wandern und dort anstelle des Halogensilans reagieren, d.h. die Stromausbeute wird drastisch verringert.

Aufgabe der Erfindung war es die Bildung dieser unerwünschten Nebenprodukte zu verhindern. Diese Aufgabe wird durch die Erfindung gelöst.

Gegenstand der Erfindung ist ein Verfahren zur elektrochemischen Herstellung von Organosiliciumverbindungen mit mindestens einem SiC-gebundenen organischen Rest, dadurch gekennzeichnet, daß eine Lösung, die mindestens ein Halogensilan enthält, einer elektrochemischen Reaktion unterworfen wird, wobei eine Anode, die ein Edelmetall oder eine Legierung, die ein oder mehrere Edelmetalle enthält, von einem Halogenfänger umspült wird.

Gegenstand der Erfindung ist weiterhin eine Elektrolysevorrichtung zur Durchführung des erfindungsgemäßen Verfahrens, in der eine Kathode und eine Anode angeordnet sind, wobei die Anode ein mit Platin oder Palladium oder mit Legierungen, die Platin und/oder Palladium enthalten, beschichtetes, poröses Graphitrohr ist und am unteren Ende geschlossen ist und am oberen Ende der Halogenfänger mit Hilfe eines Metallrohres oder gasdichten Graphitrohres als Leitvorrichtung in die Elektrode eingebracht wird.

Ein weiterer Gegenstand der Erfindung ist die Verwendung der Elektrolysevorrichtung zur Herstellung von Organosiliciumverbindungen.

Das erfindungsgemäße Verfahren ist bei allen bekannten elektrochemischen Verfahren zur Herstellung von Organosiliciumverbindungen einsetzbar. Bevorzugt ist das erfindungsgemäße Verfahren jedoch bei der Herstellung von Organosiliciumverbindungen, bei denen es sich um ein Polysilan, Disilan, Cyclosilan oder Oligosilan handelt. Besonders bevorzugt ist das erfindungsgemäße Verfahren bei der Herstellung von linearen und/oder cyclischen Organosiliciumverbindungen, bei denen die linearen Verbindungen 2 - 30 Silyleinheiten und die cyclischen Verbindungen 3 - 6 Silyleinheiten aufweisen.

Beispiele für die organischen Reste, die gleich oder verschieden sein können und die die erfindungsgemäß hergestellten Organosiliciumverbindungen substituieren, sind Alkyl- und Arylreste. Bei den Alkylresten sind gesättigte Kohlenwasserstoffreste mit 1 bis 12 Kohlenstoffatomen bevorzugt.

Beispiele für Alkylreste sind der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest und Cycloalkylreste, wie Cyclopentyl-, Cyclohexyl-, Cycloheptylreste und Methylcyclohexylreste.

Bei dem Alkylrest handelt es sich besonders bevorzugt um den Methyl- und den Ethylrest, insbesondere um den Methylrest.

Beispiele für Arylreste sind der Phenyl- und der Naphthylrest und Alkarylreste, wie o-, m-, p-Tolylreste, Xylylreste und Ethylphenylreste, und Aralkylreste, wie der Benzylrest, der α- und der β-Phenylethylrest. Bei dem Arylrest handelt es sich bevorzugt um den Phenyl- und den Naphthylrest, besonders bevorzugt um den Phenylrest.

Die erfindungsgemäß hergestellten Organosiliciumverbindungen können für alle Zwecke eingesetzt werden, für die auch bisher Organosiliciumverbindungen eingesetzt werden konnten. So können zum Beispiel die erfindungsgemäß hergestellten Organopolysilane in Verfahren zur Herstellung von Siliciumcarbid(SiC)-Fasern verwendet werden. Das erfindungsgemäß hergestellte Hexamethyldisilan kann z.B. als Ausgangsverbindung für eine Trimethylsilyl-Schutzgruppe bei der Herstellung von Pharmazeutika verwendet werden.

Als Halogensilane, halogenorganische Verbindungen, Leitsalz und Lösungsmittel können bei dem erfindungsgemäßen Verfahren alle bisher bei elektrochemischen Verfahren zur Herstellung von Organosiliciumverbindungen eingesetzten Verbindungen eingesetzt werden, wie sie beispielsweise in DE-A1 40 24 600 und EP-A2 446 578 und bei P. Pons et al. in J. Organomet. Chem. 358 (1988), 31, und in J. Organomet. Chem 321 (1987), C27, beschrieben sind.

Als Halogensilane, halogenorganische Verbindungen werden bevorzugt die entsprechenden Brom- und Chlorverbindungen eingesetzt, wobei Chlorverbindungen besonders bevorzugt sind.

Beispiele für die Halogensilane, Dihalogensilane, Trihalogensilane, Tetrahalogensilane oder Halogencarbohalogensilane sind Trimethylchlorsilan, Trimethylbromsilan, Triethylchlorsilan, Dimethylethylchlorsilan, Dimethyl-t-butylchlorsilan, Dimethylphenylchlorsilan, Methyldiphenylchlorsilan, Dimethyldichlorsilan, Dimethyldibromsilan, Ethylmethyldichlorsilan, Methylphenyldichlorsilan, Methyl-t-butyldichlorsilan, Di-n-propyldichlorsilan, Methyl-n-hexyldichlorsilan, Methyl-p-biphenyldichlorsilan, Methyltrichlorsilan, Methyltribromsilan, Ethyltrichlorsilan, Propyltrichlorsilan, Tetrachlorsilan, Chlormethyldimethylchlorsilan, 3-Chlorpropyldimethylchlorsilan, 1,1,1,2-Tetramethyl-phenylchlordisilan, 1,1,1,2,2-Pentamethylchlorsilan, 1,1,2,2-Tetramethyldichlordisilan, 1,1,2-Trimethyl-2-phenyldichlordisilan oder Gemische daraus. Besonders bevorzugt sind Dimethyldichlorsilan und Trimethylchlorsilan.

Beispiele für halogenorganische Verbindungen sind Chlorbenzol, Brombenzol, Tetrachlorkohlenstoff, Trichlorethan, Dichlorethan und Benzylchlorid.

Als Leitsalze werden inerte Salze oder deren Gemische verwendet, die nicht mit den Reaktionskomponenten reagieren.

Beispiele für Leitsalze sind Salze der allgemeinen Formel M⁺Y⁻, worin M z.B. für Li, Na, NBu₄, NMe₄, NEt₄ steht, und Y z.B. ClO₄, Cl, Br, I, NO₃, BF₄, AsF₆, BPh₄, PF₆, AlCl₄, CF₃SO₃ und SCN bedeutet, worin Bu, Me, Et bzw. Ph eine Butyl-, Methyl-, Ethyl- bzw. Phenylgruppe bezeichnet. Beispiele geeigneter Elektrolyte schließen Tetraethylammoniumtetrafluoroborat und Tetrabutylammoniumtetrafluoroborat ein.

Als Lösungsmittel können alle aprotischen Lösungsmittel verwendet werden, die nicht mit dem Halogensilan reagieren und die selbst erst bei einem negativeren Potential als die Halogensilane reduziert werden. Geeignete Lösungsmittel sind alle, in denen zumindest teilweise die eingesetzten Verbindungen unter Betriebsbedingungen bezüglich Konzentration und Temperatur löslich sind. In einer speziellen Ausführungsform kann auch das eingesetzte Halogensilan selbst als Lösungsmittel dienen. Ein Beispiel dafür ist Dimethyldichlorsilan.

Beispiele für geeignete Lösungsmittel sind Tetrahydrofuran, Acetonitril, gamma-Butyrolacton, Dimethoxyethan mit Nitromethan, 1,3-Dioxolan, flüssiges SO₂, Tris(dioxa-3,6-heptyl)amin, Trimethylharnstoff, Dimethylformamid, Dimethylsulfoxid, 1,2-Dimethoxyethan, Bis(2-Methoxyethyl)-ether, p-Dioxan und Hexamethylphosphorsäuretriamid sowie Gemische dieser Lösungsmittel.

Die Auswahl der Reaktionsbedingungen, wie die Konzentration der Einzelkomponenten, die Reaktionstemperatur, die vorzugsweise bei Raumtemperatur liegt, der Reaktionsdruck, der vorzugsweise Atmosphärendruck beträgt, das Kathodenmaterial bestehend aus leitfähigen Metallen oder Legierungen, wie beispielsweise Silber, Platin, Stahl oder Graphit, wobei Stahl bevorzugt ist, sowie die Stromdichte liegen im allgemeinen Fachwissen des Fachmanns. Es können aber auch höhere oder niedrigere Reaktionstemperaturen und Reaktionsdrucke zum Einsatz kommen.

Das erfindungsgemäße Verfahren kann auf jedem üblichen Weg durchgeführt werden unter Verwendung einer Elektrolysezelle mit einer Kathode und einer Anode. Die Elektrolysezelle kann eine geteilte oder ungeteilte Elektrolysezelle sein, wobei die ungeteilte Elektrolysezelle bevorzugt ist, da sie vom Aufbau am einfachsten ist.

Das erfindungsgemäße Verfahren findet unter Inertgasatmosphäre statt, wobei als Inertgase Stickstoff, Argon oder Helium verwendet werden können. Bevorzugt ist die Verwendung von Stickstoff.

Die Elektrolysezelle wird mit einem Potentiostaten oder einem Galvanostaten versehen, um das Potential oder die Intensität des Stromes zu regeln. Die Umsetzung kann mit und ohne kontrolliertem Potential durchgeführt werden.

Die Elektroden, die als Kathode verwendet werden können, sind vorzugsweise aus Graphit oder einem inerten Metall wie Gold, Silber, Platin oder einem anderen Metall oder einer Legierung, die ziemlich inert ist, z.B. rostfreiem Stahl, wobei inert bedeutet, daß die Kathode unter den gewählten Reaktionsbedingungen sich chemisch nicht verändert.

Die Gegenelektrode (Anode) kann aus allen Werkstoffen bestehen, die eine ausreichende elektrische Leitfähigkeit besitzen, sich unter den gewählten Reaktionsbedingungen chemisch inert verhalten und mit einem Edelmetall oder einer Legierung, die ein oder mehrere Edelmetalle enthält, beschichtet sind bzw. bereits daraus bestehen, wobei als Edelmetalle Rhenium, Ruthenium, Rhodium, Osmium, Iridium, Platin oder Palladium verwendet werden und wovon Platin und/oder Palladium oder Legierungen, die Platin und/oder Palladium enthalten, bevorzugt sind. Falls es sich um eine beschichtete Anode handelt, ist als zu beschichtendes Anoden-Grundmaterial Siliciumcarbid, Eisensilicid oder Graphit bevorzugt. Besonders bevorzugt ist als Grundmaterial Graphit und als Beschichtungsmaterial Palladium und/oder Platin oder Legierungen, die Platin und/oder Palladium enthalten, wobei Palladium bevorzugt ist, da es in der Anschaffung kostengünstiger ist.

Eine bevorzugte Beschichtung des Grundmaterials der Anode wird wie folgt durchgeführt: Eine wässrige Palladiumsalzlösung wird auf eine Graphit-Elektrode aufgetragen und nach dem Trocknen der Elektrode wird das Palladium zum Metall reduziert. Die Beschichtung auf der Anode muß nicht vollständig sein, d.h. dicht sein. Eine Schichtdicke von ≤ 0,2 µm ist ausreichend. Es ist jedoch auch möglich eine Schichtdicke von über 0,2 µm zu wählen. Da das Edelmetall eine katalytische Wirkung besitzt, sind katalytische Mengen des Edelmetalls oder der edelmetallhaltigen Legierung, die über die Oberfläche verteilt werden, ausreichend.

Die Beschichtung kann auch durch elektrochemische Abscheidung aus Lösungen auf die Elektrode aufgebracht werden.

Als Halogenfänger werden bei Reaktionstemperatur, bevorzugt bei Raumtemperatur, gasförmige ungesättigte Kohlenwasserstoffe, wie beispielsweise Propen, Buten, Butadien, Ethen, Ethin oder Wasserstoff, eingesetzt. Es können auch Gemische aus verschiedenen Halogenfängern verwendet werden. Bevorzugt werden Halogenfänger eingesetzt, deren Reaktionsprodukte bei Reaktionstemperatur gasförmig sind und dadurch leicht aus dem Reaktionssystem entfernt werden können. Eine besonders bevorzugte Ausführungsform besteht darin, daß als Halogenverbindungen Chloride/Chlorsilane und als Halogenfänger Wasserstoff eingesetzt werden.

Der Halogenfänger wird so dosiert, daß das Gas die Anode umspült. Dies kann beispielsweise derart erfolgen, daß unterhalb der Anode ein Gasleitungsrohr angebracht ist und durch dieses der Halogenfänger in das System eingeleitet wird. In einer besonders bevorzugten Ausführungsform wird als Anode ein mit Platin oder Palladium oder mit Legierungen, die Platin und/oder Palladium enthalten, beschichtetes, poröses Graphitrohr eingesetzt. Die Anode ist am unteren Ende geschlossen; am oberen Ende wird der Halogenfänger mit Hilfe eines Metallrohres in die Elektrode eingebracht, wobei das Metallrohr gleichzeitig als Stromzuführung dienen kann. Der Halogenfänger wird durch die Poren des Graphitrohres an die äußere Anodenoberfläche geleitet und reagiert dort mit dem entstandenen Halogen.

Die Menge an Halogenfänger hängt von der Größe der Apparatur, der Bauart der Anode und der Bauart der Elektrolysezelle ab und muß so eingestellt werden, daß die Anode während der Elektrolyse vollständig vom Halogenfänger umspült wird. Der Halogenfänger muß - bezogen auf die elektrochemische Reaktion - im stöchometrischen Überschuß eingesetzt werden.

Beim Einsatz von Wasserstoff als Halogenfänger entsteht als Reaktionsprodukt der Halogenwasserstoff; beim Einsatz von Ethen und Ethin als Halogenfänger entstehen gesättigte genkohlenwasserstoffe. Der überschüssige Halogenfänger und die Reaktionsprodukte werden aus dem Elektrolysesystem kontinuierlich entfernt. Eine anschließende Trennung von Halogenfänger und Reaktionsprodukt ist beispielsweise durch fraktionierte Kondensation oder durch Wasch- und Adsorptionsverfahren möglich. Der überschüssige Halogenfänger kann wieder in die Elektrolysezelle eingeleitet werden.

Die erfindungsgemäße Elektrolysevorrichtung wird an Hand einer bevorzugten Ausführungsform beschrieben. Als Elektrolyseapparatur wird ein Quickfit-Reaktionsgefäß mit einer lindersymmetrischen Elektrodenanordnung verwendet (ungeteilte Zelle). Die Anode befindet sich im Mittelpunkt des Systems und ist ein mit Platin oder Palladium oder mit Legierungen enthaltend Platin und/oder Palladium beschichtetes poröses Graphitrohr. Die Anode ist am unteren Ende geschlossen, am oberen Ende offen und das obere offene Ende ist gasdicht und stromleitend mit einer Leitvorrichtung für den Halogenfänger verbunden. Die Leitvorrichtung ist beispielsweise ein gasdichtes Graphitrohr oder ein Metallrohr, vorzugsweise ein Metallrohr, wobei das Metallrohr gleichzeitig als Stromzuführung dienen kann. Die Leitvorrichtung kann aber auch unterhalb der Anode in Form eines Gasleitungsrohrs angebracht sein, so daß durch dieses der Halogenfänger in das System eingeleitet wird.

### Allgemeine Arbeitsvorschrift

Die verwendeten Leitsalze werden vor der Reaktion im Ölpumpenvakuum bei 50°C getrocknet. Tetrahydrofuran (THF) wird durch Destillation über einer Na/K-Legierung getrocknet, Hexamethylphosphorsäuretriamid (HMPT) wird durch Zusatz von NaH und anschließende Destillation von Feuchtigkeitsspuren befreit. Die verwendeten Silane werden vor der Reaktion destillativ gereinigt. Alle Arbeitsschritte werden unter Inertgasatmosphäre (Stickstoff) durchgeführt, die Elektrolysen erfolgen galvanostatisch bei Raumtemperatur.

### Anodenpräparation

Als Anoden werden platinierte Platinelektroden (käuflich erhältlich bei Heraeus GmbH) oder mit Palladium oder Platin beschichtete poröse Graphitanoden eingesetzt. Ein poröser Graphitstab (käuflich erhältlich bei SIGRI GmbH) wird mit einer Innenbohrung, durch die später der Wasserstoff eingeleitet wird, versehen. Auf die gereinigte Graphitanode wird eine Lösung bestehend aus 2 g Palladium(II)chlorid (20 g Hexachloroplatinsäure), 20 ml konzentrierter Salzsäure und 50 ml Wasser durch Pinseln aufgetragen. Nach dem Trocknen der Elektrode wird auf diese - zur Reduktion des Edelmetalls - eine 37 %ige Formaldehydlösung aufgebracht. Anschließend wird die Elektrode mit 30 %iger Natronlauge und mit Wasser gewaschen. Vor dem Einsatz wird die Anode im Ölpumpenvakuum bei 80°C getrocknet; anschließend wird am oberen offenen Ende der Anode ein Metallrohr gasdicht befestigt.

### Beispiel 1

0,43 g Tetraethylammoniumtetrafluoroborat werden in einem Gemisch aus 50 ml Tetrahydrofuran und 50 ml Hexamethylphosphorsäuretriamid gelöst und in eine trockene, schutzgasgespülte Elektrolysezelle überführt. Nach der Zugabe von 100 ml Dimethyldichlorsilan entsteht eine trübe Lösung, die mit Hilfe einer platinbeschichteten Graphitanode bei einem konstanten Strom von 50 mA (Stromdichte 0,5 mA/cm²) elektrolysiert wird. Der Wasserstoff wird über die poröse Anode mit ca. 320 ml/h in das System eingebracht; der überschüssige Wasserstoff und der entstehende Chlorwasserstoff werden über eine Gaswaschflasche gefüllt mit Siliconöl aus dem System geschleust. Um mitgerissene Chlorsilane abzutrennen, wird der Gasstrom auf -60°C gekühlt und anschließend in 50 ml 0,1 n AgNO₃-Lösung eingeleitet. Die entstandene AgCl-Menge wird nach der Reaktion durch potentiometrische Titration der verbleibenden AgNO₃-Menge mit 0,1 n KCl-Lösung bestimmt.

Nach 8 Stunden Reaktionszeit wird die Elektrolyse abgebrochen; der an der Kathode entstandene Niederschlag wird abfiltriert, mit THF gewaschen und im Vakuum getrocknet. Der Niederschlag (0,18 g) kann mittels IR-Spektroskopie als Dimethylpolysilan identifiziert werden. Die Stromausbeute, bezogen auf die nachgewiesene HCl-Menge (nicht erfaßt wird die in der Lösung verbleibende HCl-Menge), beträgt 21 %.

### Beispiel 2

0,3 g Tetrabutylammoniumtetrafluoroborat werden in 20 ml HMPT gelöst und gemeinsam mit 180 ml Me₂SiCl₂ in die Elektrolysezelle eingebracht. Die weitere Vorgangsweise erfolgt wie in Beispiel 1 beschrieben. Die Elektrolyse erfolgt mit 58 mA (0,58 mA/cm² Stromdichte). Nach 8 Stunden werden 0,22 g Dimethylpolysilan erhalten; dies entspricht einer Stromausbeute von 42% - bezogen auf die nachgewiesene HCl-Menge.

### Beispiel 3

Analog zu Beispiel 1 mit der Änderung, daß anstatt Dimethyldichlorsilan 100 ml Trimethylchlorsilan elektrolysiert werden. Innerhalb von 20 Stunden Reaktionszeit werden 1,44 g Hexamethyldisilan gebildet. Die Analyse von Hexamethyldisilan erfolgt mittels ²⁹Si-NMR-Spektroskopie (- 19,7 ppm gegen Tetramethylsilan (TMS)-Standard) und mittels Gaschromatographie/Massenspektroskopie(GS/MS) (Molekülmassenpeak 146). Die Stromausbeute, bezogen auf den Chlorwasserstoff, beträgt 30 %.

### Beispiel 4

Analog Beispiel 2, mit der Änderung, daß eine mit Palladium beschichtete Graphitanode eingesetzt wird. Die Ausbeute beträgt 0,21 g Dimethylpolysilan, die Stromausbeute wird mit 39 % bestimmt.

### Beispiel 5

Analog Beispiel 2 mit der Änderung, daß eine platinierte Platinelektrode eingesetzt wird und der Wasserstoff mit Hilfe eines Gaseinleitungsrohres unterhalb der Anode in das System eingeleitet wird. Die Reaktionstemperatur beträgt 40°C.

Die Ausbeute beträgt 0,21 g Dimethylpolysilan, die Stromausbeute wird mit 42 % bestimmt.

## Patentansprüche

1. Verfahren zur elektrochemischen Herstellung von Organosiliciumverbindungen mit mindestens einem SiC-gebundenen organischen Rest, dadurch gekennzeichnet, daß eine Lösung, die mindestens ein Halogensilan enthält, einer elektrochemischen Reaktion unterworfen wird, wobei eine Anode, die ein Edelmetall oder eine Legierung, die ein oder mehrere Edelmetalle enthält, von einem Halogenfänger umspült wird.

2. Verfahren nach Anspruch 1, dadurch gekennzeichnet, daß als Halogensilan ein Chlorsilan verwendet wird.

3. Verfahren nach Anspruch 1 oder 2, dadurch gekennzeichnet, daß als Organosiliciumverbindung ein Polysilan, Disilan, Cyclosilan oder Oligosilan hergestellt wird.

4. Verfahren nach einem oder mehreren der Ansprüche 1 bis 3, dadurch gekennzeichnet, daß lineare und/oder cyclische Organosiliciumverbindungen hergestellt werden, wobei die linearen Verbindungen 2 - 30 Silyleinheiten und die cyclischen Verbindungen 3 - 6 Silyleinheiten aufweisen.

5. Verfahren nach einem oder mehreren der Ansprüche 1 bis 4, dadurch gekennzeichnet, daß als Anode ein poröses Graphitrohr, das mit einem Edelmetall oder einer Legierung, die ein oder mehrere Edelmetalle enthält, beschichtet ist, das am unteren Ende geschlossen, dessen oberes Ende offen und das im Inneren mit einer Leitvorrichtung für den Halogenfänger versehen ist, eingesetzt wird.

6. Verfahren nach einem der Ansprüche 1 bis 5, dadurch gekennzeichnet, daß als Halogenfänger Ethen, Ethin, Wasserstoff oder Gemische dieser Stoffe, insbesondere Wasserstoff, verwendet werden.

7. Elektrolysevorrichtung zur Durchführung des Verfahrens nach einem oder mehreren der Ansprüche 1 bis 6, dadurch gekennzeichnet, daß in ihr eine Kathode und eine Anode angeordnet sind, wobei die Anode ein mit Platin oder Palladium oder mit Legierungen, die Platin und/oder, Palladium enthalten, beschichtetes, poröses Graphitrohr ist und am unteren Ende geschlossen ist und am oberen Ende der Halogenfänger mit Hilfe eines Metallrohres oder gasdichten Graphitrohres als Leitvorrichtung in die Elektrode eingebracht wird.

8. Elektrolysevorrichtung nach Anspruch 7, dadurch gekennnzeichnet, daß die Leitvorrichtung als Stromzuführung ausgebildet ist.

9. Verwendung der Elektrolysevorrichtung nach einem oder mehreren der Ansprüche 7 oder 8 zur Herstellung von Organosiliciumverbindungen.

## Claims

1. Process for the electrochemical preparation of organosilicon compounds having at least one SiC-bound organic radical, characterized in that a solution which contains at least one halosilane is subjected to an electrochemical reaction, an anode which contains a noble metal or an alloy containing one or more noble metals having a halogen scavenger flowing around it.

2. Process according to Claim 1, characterized in that the halosilane used is a chlorosilane.

3. Process according to Claim 1 or 2, characterized in that the organosilicon compound prepared is a polysilane, disilane, cyclosilane or oligosilane.

4. Process according to one or more of Claims 1 to 3, characterized in that linear and/or cyclic organosilicon compounds are prepared, the linear compounds having 2 - 30 silyl units and the cyclic compounds having 3 - 6 silyl units.

5. Process according to one or more of Claims 1 to 4, characterized in that the anode employed is a porous graphite tube which is coated with a noble metal or an alloy containing one or more noble metals, is closed at the bottom end, whose top end is open, and which in its interior is provided with a guiding device for the halogen scavenger.

6. Process according to any one of Claims 1 to 5, characterized in that the halogen scavengers used are ethene, ethyne, hydrogen or mixtures of these substances, especially hydrogen.

7. Electrolytic appliance for carrying out the process according to one or more of Claims 1 to 6, characterized in that there are arranged in it a cathode and an anode, the anode being a porous graphite tube which is coated with platinum or palladium or with alloys which contain platinum and/or palladium and being closed at the bottom end, and at the top end the halogen scavenger being introduced into the electrode with the aid of a metal tube or gas-tight graphite tube as guiding device.

8. Electrolytic appliance according to Claim 7, characterized in that the guiding device is designed as a current feed.

9. Use of the electrolytic appliance according to Claim 7 or 8 for preparing organosilicon compounds.

## Revendications

1. Procédé de préparation électrochimique de composés organiques du silicium avec au moins un radical à liaison SiC, caractérisé en ce qu'une solution qui contient au moins un halogénosilane, est soumise à une réaction électrochimique, où une anode qui contient un métal noble ou un alliage constitué d'un ou de plusieurs métaux nobles, est lavée au moyen d'un fixateur d'halogène.

2. Procédé suivant la revendication 1, caractérisé en ce que l'on utilise un chlorosilane comme halogénosilane.

3. Procédé suivant la revendication 1 ou 2, caractérisé en ce que l'on prépare un polysilane, disilane, cyclosilane ou oligosilane comme composé organique du silicium.

4. Procédé suivant l'une ou plusieurs des revendications 1 à 3, caractérisé en ce que l'on prépare des composés organiques du silicium, linéaires et/ou cycliques, où les composés linéaires présentent 2 à 30 unités silyle et les composés cycliques 3 à 6 unités silyle.

5. Procédé suivant l'une ou plusieurs des revendications 1 à 4, caractérisé en ce que l'on introduit comme anode, un bâtonnet poreux de graphite qui est revêtu d'un métal noble ou d'un alliage constitué d'un ou de plusieurs métaux nobles, qui est fermé à l'extrémité inférieure, dont l'extrémité supérieure est ouverte et qui est muni à l'intérieur d'un dispositif conducteur pour le fixateur d'halogène.

6. Procédé suivant l'une quelconque des revendications 1 à 5, caractérisé en ce que l'on utilise comme fixateur d'halogène, l'éthène, l'éthyne, l'hydrogène ou des mélanges de ces substances, en particulier l'hydrogène.

7. Dispositif d'électrolyse pour réaliser le procédé suivant l'une ou plusieurs des revendications 1 à 6, caractérisé en ce que l'on dispose dans celui-ci, une cathode et une anode, où l'anode contient un bâtonnet poreux de graphite, revêtu de platine ou de palladium ou d'un alliage qui contient du platine et/ou du palladium, qui est fermée à l'extrémité inférieure et à l'extrémité supérieure, le fixateur d'halogène est introduit dans l'électrode au moyen d'un bâtonnet métallique ou d'un bâtonnet de graphite étanche aux gaz comme dispositif conducteur.

8. Dispositif d'électrolyse suivant la revendication 7, caractérisé en ce que le dispositif conducteur est constitué sous forme d'une arrivée de courant.

9. Utilisation du dispositif d'électrolyse suivant la revendication 7 ou 8, pour la préparation de composés organiques du silicium.
